Europäisches Patentamt

European Patent Office

Office européen des brevets

(19)

(11) Veröffentlichungsnummer: **0 223 159 B1**

(12) **EUROPÄISCHE PATENTSCHRIFT**

(45) Veröffentlichungstag der Patentschrift: 27.02.91

(51) Int. Cl.⁵: **G01C 19/38**

(21) Anmeldenummer: 86115376.5

(22) Anmeldetag: 06.11.86

(54) **Vorrichtung zur Bestimmung der Nordrichtung.**

(30) Priorität: 22.11.85 DE 3541259

(43) Veröffentlichungstag der Anmeldung:
27.05.87 Patentblatt 87/22

(45) Bekanntmachung des Hinweises auf die
Patenterteilung:
27.02.91 Patentblatt 91/09

(84) Benannte Vertragsstaaten:
**DE FR GB**

(56) Entgegenhaltungen:
EP-A- 0 106 066
DE-A- 2 741 274
GB-A- 2 080 972
US-A- 3 279 086

IEEE 1985 NATIONAL AEROSPACE AND
ELECTRONICS CONFERENCES NAECON
1985, Band 1, 20.-24. Mai 1985, Seiten
260-267, IEEE, DE; K. KROGMANN: "Concept
and performance analysis of a strapdown
northfinder"

(73) Patentinhaber: **Bodenseewerk Gerätetechnik
GmbH
Alte Nussdorfer Strasse 15 Postfach 1120
D-7770 Überlingen/Bodensee(DE)**

(72) Erfinder: **Krogmann, Uwe
Zur Äsche 24
D-7770 Überlingen-Nussdorf(DE)**

(74) Vertreter: **Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
D-5620 Velbert 11 Langenberg(DE)**

**Beschreibung**

Die Erfindung betrifft eine Vorrichtung zur Bestimmung der Nordrichtung, enthaltend

(a) trägerfest (strapdown) angeordneten, zweiachsige Drehgeschwindigkeitssensormittel mit einer ersten und einer dazu senkrechten zweiten Eingangsachse in einer wenigstens annähernd horizontalen Ebene,

(b) erste beschleunigungsmessende Mittel, die auf Beschleunigungen in Richtung der ersten Eingangsachse ansprechen,

(c) zweite beschleunigungsmessende Mittel, die auf Beschleunigungen in Richtung der zweiten Eingangsachse ansprechen,

(d) signalverarbeitende Mittel, auf welche die Signale der Drehgeschwindigkeitssensormittel und der beschleunigungsmessenden Mittel aufgeschaltet sind zur Erzeugung eines Ausgangssignals nach Maßgabe des Winkels zwischen einer Referenzrichtung und Nord.

Durch die DE-AS 27 41 274 ist ein Gerät zur automatischen Bestimmung der Nordrichtung bekannt, bei welchem ein zweiachsiger Kreisel mit im wesentlichen vertikaler Drallachse vorgesehen ist. An zwei zueinander senkrechten Eingangsachsen des Kreisels sind je ein Lageabgriff und ien Drehmomenterzeuger vorgesehen. Das Signal jedes einer Eingangsachse zugeordneten Lageabgriff ist zur elektrischen Fesselung des Kreisels überkreuz auf den Drehmomenterzeuger der jeweils anderen Eingangsachse geschaltet. Die Drallachse des Kreisels ist dabei vertikal angeordnet. Die den beiden Drehmomenterzeugern zugeführten Signale sind gleichzeitig auf einen Nordabweichungsrechner geschaltet, welcher aus dem Verhältnis der Signale ein die Abweichung einer gerätefesten Referenzrichtung von Nord wiedergebendes Signal liefert. Wenn die Referenzrichtung von einer der beiden Eingangsachsen gebildet ist, dann ist der Nordabweichungswinkel gleich dem Arcustangens des Verhältnisses der von den beiden Drehmomenterzeugern infolge der aufgeschalteten Signale ausgeübten Drehmomente. Praktisch handelt es sich hierbei um einen elektrisch gefesselten, zweiachsigen Wendekreisel, der die beiden in Richtung der Eingangsachse fallenden Komponenten der Horizontalkomponente der Erddrehgeschwindigkeit mißt, aus deren Verhältnis sich der Nordabweichungswinkel ergibt. Vorausgesetzt ist hierbei, wie gesagt, daß die Drallachse des Kreisels genau senkrecht liegt.

Es ist durch die DE-AS 27 41 274 weiterhin bekannt, ein Paar von Beschleunigungsmessern vorgesehen, die in fester Lagebeziehung zu dem Gehäuse des Kreisels angebracht sind und deren Empfindlichkeitsachsen zueinander senkrecht stehen und parallel zu den beiden Eingangsachsen des Kreisels verlaufen. Es sind signalverarbeitende Mittel vorgesehen, denen sowohl die Signale des Wendekreisels als auch die Beschleunigungsmessersignale zugeführt werden. Die signalverarbeitenden Mittel berechnen den wahren Nordabweichungswinkel unter Berücksichtigung der von den Beschleunigungsmessern ermittelten Neigung der Kreiseldrallachse gegenüber der Vertikalen. Es ist dadurch möglich, den Nordabweichungswinkel oder Azimutwinkel nach Nord auch dann zu bestimmen, wenn die Kreiseldrallachse nicht genau vertikal ausgerichtet ist.

Bei einer Ausführung der DE-AS 27 41 274 wird das als Quotient der Signale des Wendekreisels erhaltene Signal als Schätzwert der Nordabweichung zusammen mit Fehlersignalen von den Beschleunigungsmessern auf einen Fehlersignalrechner geschaltet, der unter Zugrundelegung von Schätzwerten der Transformationsparameter zwischen einem kreiselgehäusefesten und einem erdfesten Koordinatensystem zur Berechnung von Fehlersignalen für diese Transformationsparameter eingerichtet ist. Dabei sind diese Schätzwerte der Transformationsparameter zunächst durch den Quotienten der Signale des Wendekreisels bestimmt. Die so erhaltenen und gegebenenfalls mit einer Wichtung versehenen Fehlersignale werden einem Korrektursignalrechner zur Berechnung von Korrektursignalen für die Transformationsparameter zugeführt. Ein Transformationsparameterrechner liefert korrigierte Transformationsparameter. Diese korrigierten Transformationsparameter sind ihrerseits in einem geschlossenen Kreis als neue Schätzwerte der Transformationsparameter auf den Fehlersignalrechner für die Berechnung der Fehlersignale aufgeschaltet. Gleichzeitig werden die korrigierten Transformationsparameter einem Rechner zur Berechnung der sich daraus ergebenden korrigierten Nordabweichung und/oder einer Funktion derselben zugeführt. Diese Art der Signalverarbeitung über die Transformationsparameter in einem geschlossenen Kreis führt zwar zu sehr genauen Ergebnissen, erfordert aber einen erheblichen Rechneraufwand.

Durch die EP-A-106 066 ist ein Gerät zur Bestimmung der Nordrichtung bekannt, bei welchem mittels eines zweiachsigen Kreisels mit vertikaler Drallachse aus den Komponenten der Horizontalkomponente der Erddrehgeschwindigkeit der Azimutwinkel nach Nord bestimmt wird. Um den Einfluß von Störbewegungen um die Eingangsachsen zu unterdrücken, sitzt der Kreisel zusammen mit Beschleunigungsmessern auf einer kardanisch gelagerten Plattform. Die Beschleunigungsmesser sind auf Drehmomenterzeuger des Kreisels geschaltet. Abgriffe des Kreisels steuern Plattformstellmotore. Bei einer anderen Ausführung der EP-A-106 066 werden diese Vorgänge in einem Rechner mit einer "virtuellen Plattform" simuliert.

Auch diese Anordnung ist ziemlich aufwendig.

Die US-A-3 279 086 zeigt eine Anordnung mit einem zweiachsigen Kreisel mit im wesentlichen vertikal angeordneter Drallachse, bei welcher Abgriffsignale auf Torquer aufgeschaltet sind. Es wird dort aber kein Verhältnis von Torquersignalen gebildet wie bei der DE-B-2 741 274. Vielmehr ist der Nordabgriff über einen Verstärker auf einen Stellmotor geschaltet, durch welchen die eine Eingangsachse nach Nord eingedreht wird. Es sind Beschleunigungsmesser vorgesehen, welche in die Fesselkreise eingreifen, d.h. deren Signale auf die Torquer des Kreisels geschaltet sind.

Der Erfindung liegt die Aufgabe zugrunde, eine Vorrichtung der eingangs genannten Art zur Bestimmung der Nordrichtung so auszubilden, daß mit einfachen Mitteln der Einfluß von Fehlausrichtungen der Eingangsachsen und rotatorischen Störungen eliminiert wird.

Erfindungsgemäß wird diese Aufgabe dadurch gelöst, daß

(e) durch die signalverarbeitenden Mittel von den Drehgeschwindigkeitssensormitteln erhaltenen Signalen, die bei genau horizontal ausgerichteter Ebene der Eingangsachsen den in die Richtungen der Eingangsachsen fallenden Komponenten der Horizontalkomponente der Erddrehgeschwindigkeit proportional sind, bei nichthorizontaler Ausrichtung der besagten Ebene von den zugehörigen beschleunigungsmessenden Mitteln abgeleitete Korrektursignale überlagert sind, welche

(e₁) die in Richtung der Eingangsachsen fallende Komponente der Vertikalkomponente der Erddrehgeschwindigkeit und

(e₂) die Drehgeschwindigkeit des Trägers relativ zur Erde kompensieren, und

(f) die signalverarbeitenden Mittel weiterhin quotientenbildende Mittel zur Bildung des Quotienten der so korrigierten Drehgeschwindigkeitssignale enthalten.

Die von den Drehgeschwindigkeitssensormitteln, z.B. einem Wendekreisel, erhaltenen Signale enthalten außer der jeweiligen Komponente der Horizontalkomponente der Erddrehgeschwindigkeit bei einer Fehlausrichtung, also z.B. nicht genau vertikaler Drallachse eines Wendekreisels, Anteile, die von der Vertikalkomponente der Erddrehgeschwindigkeit herrühren. Aus den Beschleunigungssignalen im Verhältnis zur Erdbeschleunigung kann auf den Winkel zwischen Eingangsachse und Horizontaler geschlossen werden und mit der bekannten Vertikalkomponente der Erddrehgeschwindigkeit ein Korrektursignal erzeugt werden. Ein weiteres Korrektursignal, welches die von dem Wendekreisel natürlich auch erfaßten Drehgeschwindigkeiten des Trägers gegenüber der Erde berücksichtigt, kann ebenfalls aus dem als Verhältnis von Beschleunigung zu Erdbeschleunigung gewonnenen Lagewinkeln abgeleitet werden.

Ausgestaltungen der Erfindung sind Gegenstand der Unteransprüche.

Zwei Ausführungsbeispiele der Erfindung sind nachstehend unter Bezugnahme auf die zugehörigen Zeichnungen näher erläutert:

Fig. 1     veranschaulicht das Grundprinzip eines Nordsuchers mit einem trägerfest installierten zweiachsigen Wendekreisel.

Fig. 2     zeigt die Anordnung des Wendekreisels und beschleunigungsmessender Mittel in Form zweier nach den Eingangsachsen des Wendelkreisels ausgerichteter Beschleunigungsmesser bei nicht-horizontal ausgerichteter Drallachse des Wendekreisels.

Fig. 3     zeigt als Blockschaltbild eine erste Ausführungsform der signalverarbeitenden Mittel, bei welcher ein dem Tangens des Azimutwinkels entsprechendes Signal durch Bildung des Quotienten zweier Größen von der Dimension eines Winkels erzeugt wird, wobei diese Größen hauptsächlich durch zeitliche Integration der den Winkelgeschwindigkeiten proportionalen Signale des Wendekreisels erhalten werden.

Fig. 4     zeigt eine andere Ausführungsform der signalverarbeitenden Mittel, bei welcher ein dem Tangens des Azimutwinkels entsprechendes Signal durch Division zweier Meßgrößen von der Dimension einer Winkelgeschwindigkeit gebildet wird.

Fig. 5     zeigt eine abgewandelte Ausführung von zweiachsigen Drehgeschwindigkeitssensormitteln.

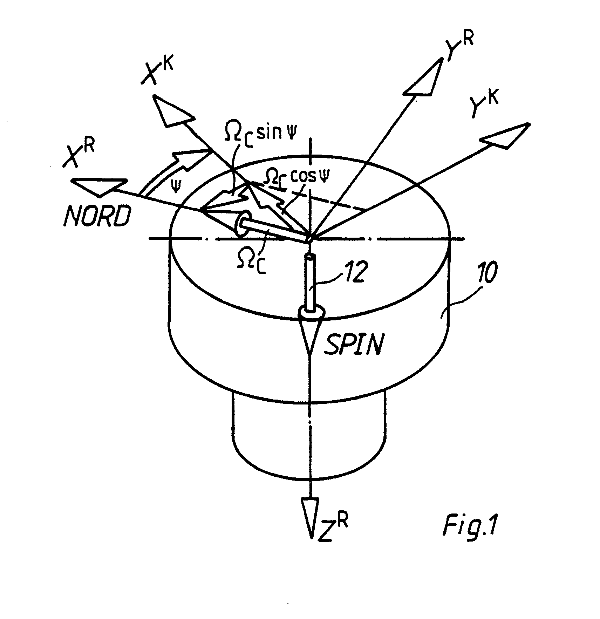

In Fig.1 ist mit 10 ein zweiachsiger, elektrisch gefesselter Wendekreisel bezeichnet, der etwa nach Art der DE-AS 27 41 274 ausgebildet sein kann. In Fig.1 ist der Drallvektor 12 genau vertikal nach unten gerichtet, also in Richtung $Z^R$ eines erdfesten Koordinatensystems. Die Horizontalkomponente $\Omega_c$ der Erddrehgeschwindigkeit ist nach Nord gerichtet, also in Richtung der Achse $X^R$ des erdfesten Koordinatensystems. Der Wendekreisel 10 hat zwei Eingangsachsen $X^K$ und $Y^K$ in einer zu der Drallachse 12 senkrechten Ebene. Mit $\Psi$ ist der Winkel zwischen der Nordrichtung $X^R$ und der Eingangsachse $X^K$ des Wendekreisels 10 bezeichnet. Aus Fig.1 ist ohne weiteres ersichtlich, daß in Richtung der Eingangsachse $X^K$ die Komponente $\Omega_c \cdot \cos \Psi$ der Horizontalkomponente der Drehgeschwindigkeit wirksam ist, während in Richtung der Eingangsachse $Y^K$ die Komponente $\Omega_c \cdot \sin \Psi$ wirksam wird. Diese beiden Drehgeschwindigkeiten werden von dem zweiachsigen Wendekreisel 10 gemessen und in entsprechende Signale umgesetzt. Bildet man den Quotienten dieser Signale, so erhält man den Tangens des Nordabweichungs- oder Azimutwinkels $\Psi$. Die Mehrdeutigkeit der Tangensfunktion kann durch eine geeignete Quadrantenlogik berücksichtigt werden, wie auch in der DE-AS 27 41 274 beschrieben ist. Diese Art der Bestimmung der Nordrichtung mit einem Wendekreisel setzt voraus, daß die Drallachse 12 genau vertikal ist, die Eingangsachsen $X^K$ und $Y^K$ in einer Horizontalebene zueinander und zu der Drallachse senkrecht angeordnet sind, daß weiterhin Kreiselfehler vernachlässigbar sind und keine Störungen durch Vibrationen auftreten.

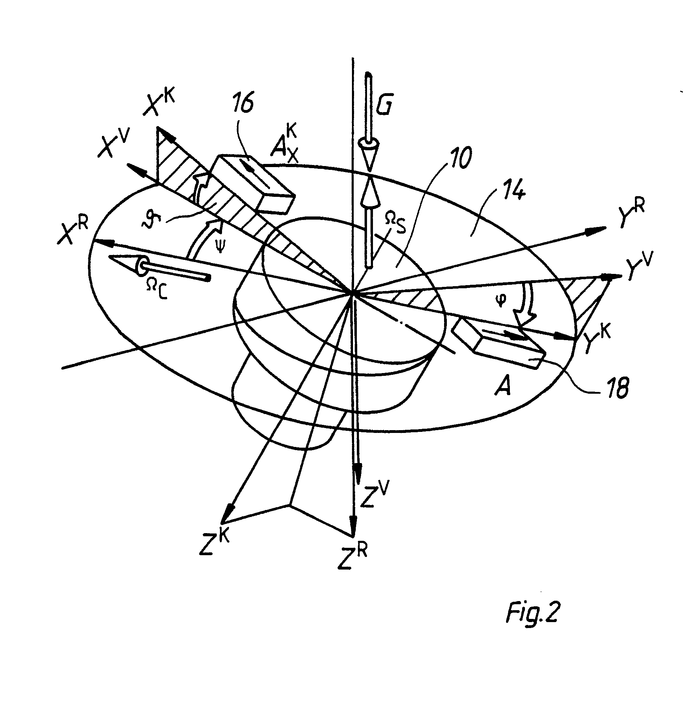

Im allgemeinen ist bei trägerfester Montage der Wendekreisel 10 mit seiner Drallachse 12 nicht genau vertikal ausgerichtet. Diese Verhältnisse sind in Fig.2 dargestellt.

In Fig.2 ist mit 14 die Horizontalebene bezeichnet. In der Horizontalebene liegt die Horizontalkomponente $\Omega_c$ der Erddrehgeschwindigkeit. Senkrecht zu dieser Ebene ist die Vertikalkomponente $\Omega_s$ der Erddrehgeschwindigkeit nach oben gerichtet. Ebenso senkrecht zu dieser Ebene nach unten gerichtet ist der Vektor der Erdbeschleunigung G. Das erdfeste Koordinatensystem enthält die vertikal nach unten gerichtete Koordinatenachse $Z^R$ sowie die in der Ebene 14 liegenden erdfesten Koordinatenachsen $X^R$ (Nord) und $Y^R$ (Ost). Der Drallvektor des Wendekreisels 10 liegt in Richtung der Achse $Z^K$ eines kreiselfesten Koordinatensystems mit der Achse $Z^K$ und den zueinander und zu dieser Achse senkrechten Achsen $X^K$ und $Y^K$, die den Eingangsachsen des zweiachsigen Wendekreisels entsprechen. Durch senkrechte Projektion der Achsen $X^K$ und $Y^K$ des kreiselfesten Koordinatensystems auf die Ebene 14 ergeben sich die Achsen $X^V$ und $Y^V$, die in der Ebene 14 senkrecht zu einer mit der erdfesten Vertikalen $Z^R$ zusammenfallenden Koordinatenachse $Z^V$ sind. Gesucht ist der Winkel zwischen der durch die Nordrichtung $X^R$ gehenden Vertikalebene und einer durch die Eingangsachse $X^K$ des Wendekreisels 10 gehenden Vertikalebene, wie in Fig.2 dargestellt ist.

Die Sensoranordnung enthält ähnlich wie bei der DE-AS 27 41 274 zwei Beschleunigungsmesser 16 und 18, welche auf Beschleunigungen (einschließlich der Erdbeschleunigung) in Richtung der Eingangsachsen $X^K$ bzw. $Y^K$ des Wendekreisels 10 ansprechen.

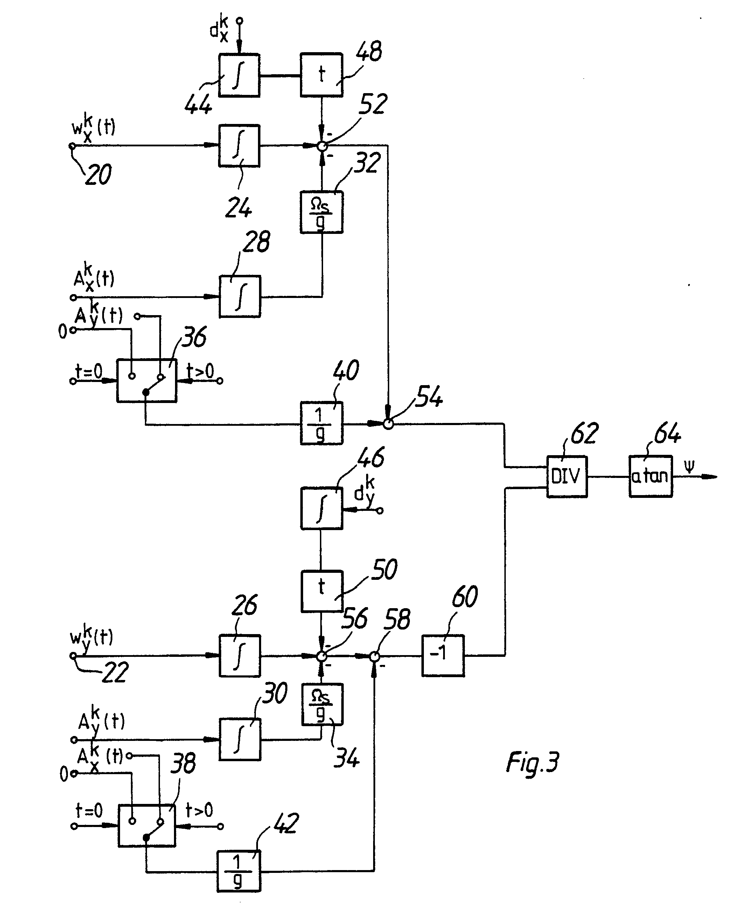

Der Wendekreisel 10 in Fig.2 liefert ein Signal $w_x^K(t)$ als Drehgeschwindigkeit um die Eingangsachse X und ein Signal $w_y^K(t)$ (als Drehgeschwindigkeit um die Eingangsachse $Y^K$. Diese Signale liegen an Eingängen 20 bzw. 22 der signalverarbeitenden Mittel von Fig.3. Die beiden Signale des Wendekreisels werden zeitlich integriert, wie durch Block 24 bzw. 26 dargestellt ist. Es ergibt sich dadurch ein Signal von der Dimension eines Winkels. Ebenfalls zeitlich integriert werden die Signale $A_x^K(t)$ und $A_y^K(t)$, wie durch Blocks 28 bzw. 30 angedeutet ist. Das so erhaltene Signal wird multipliziert mit dem Verhältnis der Vertikalkomponente $\Omega_s$ der Erddrehgeschwindigkeit zu dem Betrag g des Erdbeschleunigungsvektors G. Das ist durch die Blocks 32 bzw. 34 angedeutet. Auch hier ergibt sich ein Signal von der Dimension eines Winkels. Weiterhin werden die Beschleunigungssignale zu Zeitpunkten $t \gg 0$ (dargestellt durch Schalter 36 bzw. 38) durch die Erdbeschleunigung g dividiert, wie durch Blocks 40 bzw. 42 dargestellt ist. Auch hier ergibt sich als Verhältnis der Beschleunigung zur Erdbeschleunigung eine Größe von der Dimension eines Winkels. Weitere Korrektursignale werden abgeleitet aus den als bekannt vorausgesetzten Driften $d_x^k$ bzw. $d_y^k$. Diese Driften sind in Speichern 44 bzw. 46 gespeichert. Die Speicher 44 und 46 sind in Fig.3 als Integratoren dargestellt, auf welche die Driften als Anfangsbedingungen aufgeschaltet sind, deren Eingang aber im übrigen null ist. Der Ausgang der Speicher 44 bzw. 46 wird mit der Integrationszeit, ausgehend von einem Anfangszustand, multipliziert, wie durch die Blöcke 48 bzw. 50 dargestellt ist.

In einem Summierpunkt 52 werden von dem integrierten Signal des Wendekreisels 10 am Eingang 20 als erstes Korrektursignal das integrierte und mit dem Verhältnis von Vertikalkomponente der Erddrehgeschwindigkeit und Erdbeschleunigung multiplizierte Beschleunigungssignal $A_x^K(t)$ und als weiteres Korrektursignal die mit der Zeit t multiplizierte, im Speicher 44 gespeicherte Drift $d_x^k$ subtrahiert. In einem Summierpunkt 54 wird die durch die Erdbeschleunigung g dividierte Beschleunigung $A_y^K(t)$ ebenfalls als Korrektursignal subtrahiert.

In ähnlicher Weise wird von dem am Eingang 22 anliegenden zweiten Signal des Wendekreisels 10, das gemäß Block 26 integriert wird, in einem Summierpunkt 56 einmal das integrierte und mit dem Verhältnis von Vertikalkomponente der Erddrehgeschwindigkeit und Erdbeschleunigung multiplizierte Beschleunigungssignal $A_y^K(t)$ vom Beschleunigungsmesser 18 und zum anderen die in dem Speicher 46 gespeicherte, mit der Zeit multiplizierte Drift subtrahiert. In einem Summierpunkt 58 wird weiterhin das durch die Erdbeschleunigung dividierte Beschleunigungssignal $A_x^K(t)$ als weiteres Korrektursignal subtrahiert. Das Vorzeichen des so erhaltenen Signals wird umgekehrt, wie durch Block 60 dargestellt ist. Es werden auf diese Weise aus den von dem Wendekreisel 10 erhaltenen Signalen zwei korrigierte Wendekreiselsignale erzeugt. Die Signale werden durcheinander dividiert, wie durch Block 62 dargestellt ist. Der so erhaltene Quotient ist proportional dem Tangens des Azimutwinkels Ψ. Durch Arcustangensbildung, dargestellt durch Block 64, wird daraus der Winkel Ψ erhalten.

Der Winkel Ψ wird hier aus den über die Zeit integrierten Signalen gebildet. Die direkte Aufschaltung der Beschleunigungssignale dividiert durch die Erdbeschleunigung, welche ein Maß für den jeweiligen Neigungswinkel darstellt, entspricht der integrierten Winkeländerung, also einer integrierten Winkelgeschwindigkeit. Die integrierte Beschleunigung multipliziert mit dem Verhältnis von Vertikalkomponente der Erddrehgeschwindigkeit zu der Erdbeschleunigung liefert jeweils ein Korrektursignal für die in Richtung der betreffenden Eingangsachse des Wendekreisels fallende Komponente der Vertikalkomponenten der Erddrehgeschwindigkeit. Die Aufschaltung der Bescheunigung dividiert durch die Erdbeuschleunigung liefert jeweils ein Korrektursignal für die durch rotatorische Störungen auftretende Drehgeschwindigkeit des Trägers gegenüber der Erde. Durch dieses Korrektursignal wird damit der Einfluß von Drehschwingungen des Trägers oder sonstigen rotatorischen Störungen kompensiert. Ein weiteres Korrektursignal kompensiert die Drift des Wendekreisels um die jeweilige Eingangsachse.

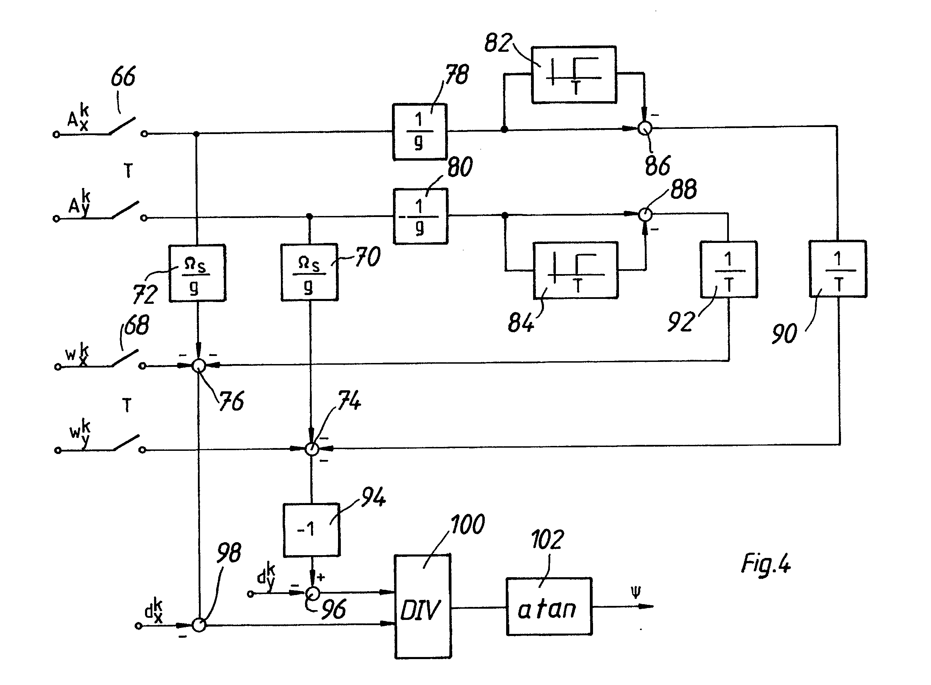

Bei der Ausführungsform nach Fig.4 werden die Beschleunigungssignale $A_x^K$, $A_y^K$ sowie die Signale $w_x^k$ und $w_y^k$ des Wendekreisels 10 mit einer Taktzeit T abgetastet und digitalisiert. Das ist durch Schalter 66 und 68 dargestellt. Die so erhaltenen Beschleunigungssignale werden mit dem Verhältnis von vertikaler Erddrehgeschwindigkeit zu Erdbeschleunigung multipliziert, was durch Blocks 70 bzw. 72 dargestellt ist und in Summierpunkten 74 bzw. 76 von den Signalen $w_y^k$ bzw. $w_x^k$ des Wendekreisels 10 subtrahiert.

Weiterhin werden die Beschleunigungssignale $A_x^K$ und $A_y^K$ mit 1/g bzw. -1/g multipliziert, was durch die Blocks 78 bzw. 80 dargestellt ist. Die so erhaltenen Signale entsprechen dem Verhältnis von Beschleunigung zu Erdbeschleunigung, liefern also ein Maß für die Neigungswinkel. Es sind Mittel 82 bzw. 84 vorgesehen, durch welche die abgetasteten und dividierten Beschleunigungssignale jeweils um einen Takt verzögerbar sind. In Summierpunkten 86 bzw. 88 werden die Differenzen des unverzögerten und des verzögerten, dividierten Beschleunigungssignals gebildet. Die so erhaltenen Differenzen werden durch die Taktzeit T dividiert, wie durch die Blöcke 90 bzw. 92 dargestellt ist. Diese Signalverarbeitung entspricht einer Differentiation, so daß ein Korrektursignal erzeugt wird, welches der Zeitableitung der Neigungswinkel proportional ist, also die durch Lageänderung des Trägers hervorgerufenen Drehgeschwindigkeiten darstellt. Dieses Signal wird als weiteres Korrektursignal in dem zugehörigen Summierpunkt 74 bzw. 76 von dem Signal des Wendekreisels 10 subtrahiert.

Das Signal von dem Summierpunkt 74 wird, wie durch Block 94 darstellt ist, in seinem Vorzeichen umgekehrt. Von den so erhaltenen Signalen wird weiterhin in Summierpunkten 96 bzw. 98 die Drift $d_x^k$ bzw. $d_y^k$ als weiteres Korrektursignal subtrahiert. Es werden so korrigierte Wendekreiselsignale erhalten, die, wie durch Block 100 dargestellt ist, durcheinander dividiert werden, wodurch der Tangens des Azimutwinkels Ψ erhalten wird. Durch geeignete Mittels 102 wird der Arcustangens gebildet und damit der Azimutwinkel Ψ selbst erhalten.

Statt eines zweiachsigen Wendekreisels können als Drehgeschwindigkeitssensormittel auch zwei einachsige Wendekreisel vorgesehen werden. Schließlich können die Drehgeschwindigkeitssensormittel auch von optischen Rotationssensoren gebildet sein.

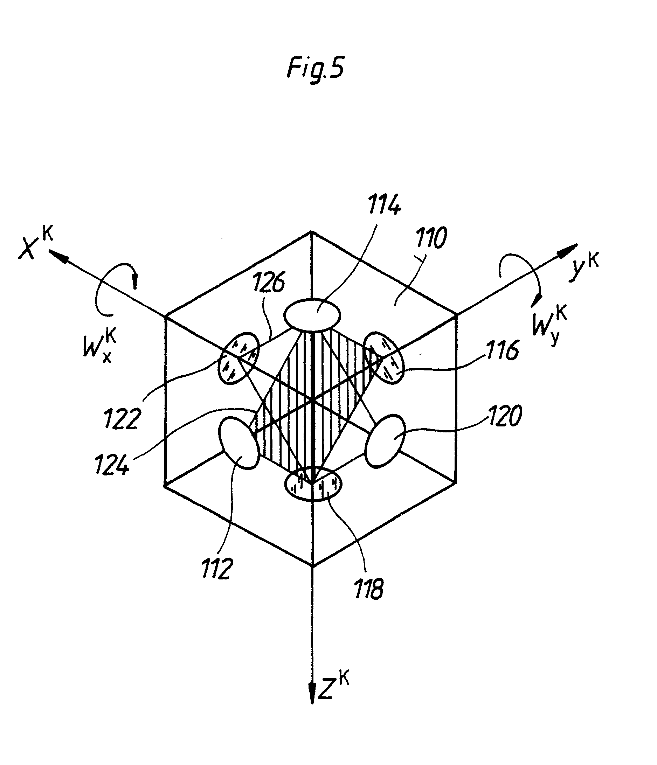

Eine bevorzugte Anordnung von zweiachsigen optischen Drehgeschwindigkeitssensormitteln, die anstelle des Wendekreisels von Fig.1 benutzt werden können, ist in Fig.5 schematisch dargestellt.

Die beiden im wesentlichen horizontalen Eingangsachsen sind wieder mit $x^K$ und $y^K$ bezeichnet. Senkrecht dazu liegt eine Achse $Z^K$, die hier allerdings nicht die Bedeutung einer Drallachse hat. Ein Glaswürfel 110 ist so angeordnet, daß seine Kanten parallel zu je einer der genannten Achsen $x^K$, $y^K$ oder $z^K$ verlaufen. Auf den Seitenflächen des Glaswürfels sitzen sechs Spiegel 112, 114, 116, 118 sowie 120 und 122. Durch diese sechs Spiegel werden zwei geschlossene viereckige Lichtwege 124 und 126 bestimmt. Der Lichtweg 124 verläuft über die Spiegel 112, 114, 116 und 118 in einer Ebene, die senkrecht zu der Eingangsachse $x^K$ liegt. Der Lichtweg 126 verläuft über die Spiegel 114, 120, 118 und 122 in einer Ebene, die senkrecht zu der Eingangsachse $y^K$ liegt. Die beiden Lichtwege 124 und 126 bilden in bekannter und daher nicht im einzelnen beschriebener Weise optische Resonatoren von Ringlaserkreiseln. Die Anordnung kann beispielsweise der DE-OS 33, 30 660, der US-PS 4 135 822 oder der US-PS 4 274 742 entsprechen. Wesentlich ist, daß auch mit solchen Ringlaserkreiseln die Drehgeschwindigkeiten um zwei zueinander senkrechte Achsen $X^K$ und $y^K$ gemessen werden können.

Statt des im Zusammenhang mit Fig.5 beschriebenen zweiachsigen optischen Drehschwindigkeitssensors können natürlich auch zwei getrennte einachsige, senkrecht zueinander angeordnete optische Drehgeschwindigkeitssensoren vorgesehen werden.

**Ansprüche**

1. Vorrichtung zur Bestimmung der Nordrichtung, enthaltend

   (a) trägerfest (strapdown) angeordnete, zweiachsigen Drehgeschwindigkeitssensormitteln (10) mit einer ersten und einer dazu senkrechten zweiten Eingangsachse ($X^K$, $Y^K$) in einer wenigstens annähernd waagerechten Ebene,

   (b) erste beschleunigungsmessende Mittel (16), die auf Beschleunigungen ($A_x^K$) in Richtung der ersten Eingangsachse ($X^K$) ansprechen,

   (c) zweite beschleunigungsmessende Mittel (18), die auf Beschleunigungen ($A_y^K$) in Richtung der zweiten Eingangsachse ($Y^K$) ansprechen,

   (d) signalverarbeitende Mittel, auf welche die Signale der Drehgeschwindigkeitssensormitteln (10) und der beschleunigungsmessenden Mittel (16,18) aufgeschaltet sind zur Erzeugung eines Ausgangssignals nach Maßgabe des Winkels zwischen einer Referenzrichtung und Nord ($X^R$), dadurch gekennzeichnet, daß

   (e) durch die signalverarbeitenden Mittel von den Drehgeschwindigkeitssensormitteln (10) erhaltenen Signalen ($w_x^k$, $w_y^k$), die bei genau horizontal ausgerichteter Ebene der Eingangsachsen den in die Richtungen der Eingangsachsen ($X^K$, $Y^K$) fallenden Komponenten der Horizontalkomponente ($\Omega_o$) der Erddrehgeschwindigkeit proportional sind, bei nicht-horizontaler Ausrichtung der besagten Ebene von den zugehörigen beschleunigungsmessenden Mitteln (16,18) abgeleitete Korrektursignale überlagert sind, welche

      ($e_1$) die in Richtung der Eingangsachsen ($X^K$, $Y^K$) fallende Komponente der Vertikalkomponente der Erddrehgeschwindigkeit und

      ($e_2$) die Drehgeschwindigkeit des Trägers relativ zur Erde. kompensieren, und

   (f) die signalverarbeitenden Mittel weiterhin quotientenbildende Mittel (62,100) zur Bildung des Quotienten der so korrigierten Drehgeschwindigkeitssignale enthalten.

2. Vorrichtung nach Anspruch 1, dadurch gekennzeichnet, daß den Drehgeschwindigkeitssignalen zusätzlich je ein Korrektursignal überlagert ist, das die bekannte Drift ($d_x^k$, $d_y^k$) der Drehgeschwindigkeitssensormitteln (10) berücksichtigt.

3. Vorrichtung nach Anspruch 1 oder 2, dadurch gekennzeichnet, daß die signalverarbeitenden Mittel für jede Eingangsachse ($X^K$, $Y^K$)

   (a) Mittel (24,26) zur zeitlichen Integration des Signals ($w_x^k$, $w_y^k$) der Drehgeschwindigkeitssensormittel (10) zur Bildung des besagten von den Drehgeschwindigkeitssensormitteln (10) erhaltenen Signals,

   (b) Mittel (28,30) zur zeitlichen Integration des der betreffenden Eingangsachsen ($X^K$, $Y^K$) zugeordneten Beschleunigungssignals ($A_x$, $A_y$) der beschleunigungsmessenden Mittel (16,18),

   (c) Mittel (32,34) zur Multiplikation des integrierten Beschleunigungssignals mit dem Verhältnis der Vertikalkomponente ($\Omega_s$) der Erddrehgeschwindigkeit zur Erdbeschleunigung (g),

   (d) Mittel (40,42) zur Division des der betreffenden Eingangsachse ($X^K$, $Y^K$) zugeordneten Beschleunigungssignals durch die Erdbeschleunigung (g) und

   (e) Mittel (52,56 bzw. 54,58) zur Subtraktion des besagten multiplizierten und integrierten Beschleunigungssignals und des besagten mit der Erdbeschleunigung multiplizierten Beschleunigungssignals als Korrektursignale von dem integrierten Signal der Drehgeschwindigkeitssensormittel (10) zur Bildung des korrigierten Drehgeschwindigkeitssignals.

4. Vorrichtung nach Anspruch 3, gekennzeichnet durch

   (a) Mittel (44,46) zur Speicherung der Kreiseldriften ($d_x^k$, $d_y^k$) der Drehgeschwindigkeitssensormittel,

   (b) Mittel (48,50) zur Multiplikation der gespeicherten Driften mit der Zeit (T) und

   (c) Mittel (52,56) zur Subtraktion des so erhaltenen Produkts als eines weiteren Korrektursignals von dem integrierten Signal der Drehgeschwindigkeitssensormittel (10).

5. Vorrichtung nach Anspruch 1 oder 2, dadurch gekennzeichnet, daß die signalverarbeitenden Mittel für jede Eingangsachse ($X^K$, $Y^K$)

   (a) Mittel (68) zum Abtasten der Signale der Drehgeschwindigkeitssensormittel (10) mit einer vorgegebenen Taktfrequenz zur Bildung der von den Drehgeschwindigkeitssensormitteln erhaltenen Signale enthalten sowie

   (b) Mittel (66) zum Abtasten der Signale der Beschleunigungsmesser (16,18) mit der vorgegebenen Taktfrequenz,

   (c) Mittel (70,72) zur Multiplikation der abgetasteten Beschleunigungssignale mit dem Quotienten von Vertikalkomponente der Erddrehgeschwindigkeit und Erdbeschleunigung,

(d) Mittel (78,80) zur Division der abgetasteten Beschleunigungssignale durch die Erdbeschleunigung (g),

(e) Mittel (82,84) zur Verzögerung der abgetasteten und dividierten Beschleunigungssignale um einen Takt (T),

(f) Mittel (86,88) zur Bildung der Differenzen des unverzögerten und des verzögerten, dividierten Beschleunigungssignals und

(g) Mittel (90,92) zur Division der so erhaltenen Differenzen durch die Taktzeit (T) und

(h) Mittel (74,76) zur Subtraktion der besagten multiplizierten Beschleunigungssignale und der besagten dividierten Differenzen als Korrektursignale von den abgetasteten Signalen der Drehgeschwindigkeitssensormittel (10) zur Bildung der besagten korrigierten Drehgeschwindigkeitssignale.

6. Vorrichtung nach Anspruch 5, dadurch gekennzeichnet, daß von den abgetasteten Signalen der Drehgeschwindigkeitssensormittel Driftsignale ($d_x^k$, $d_y^k$) als weitere Korrektursignale subtrahiert werden.

**Claims**

1. Device for determining the north direction, comprising

(a) biaxial angular rate sensor means (10) arranged in a strapdown arrangement with respect to a carrier having a first and a second input axis ($X^K$, yK) arranged perpendicularly to the first input axis in an at least approximately horizontal plane,

(b) first acceleration measuring means (16) responsive to accelerations ($A^K$) in the direction of the first input axis ($X^K$),

(c) second acceleration measuring means (18) responding to accelerations ($Ay^K$) in the direction of the second input axis ($y^{K)}$,

(d) signal processing means to which the signals of the angular rate sensor means (10) and the acceleration measuring means (16, 18) are applied for generating an output signal in accordance with the angle between a reference direction and the north ($x^R$), characterised in that

(e) through the signal processing means, signals ($w_x^k$, $w_y$k) obtained from the angular rate sensor means (10) and which signals are proportional to the components of the horizontal component (c) of the angular rate of earth and which components fall into the direction of the input axes ($x^K$, $Y^K$), when the plane of the input axes ($X^K$, $y^{K)}$) is exactly horizontally aligned, are superimposed by correction signals derived from the associated acceleration measuring means (16, 18) when the said plane is not horizontally aligned, which correction signals compensate

($e_1$) the components of the vertical component of the angular rate of earth and which components fall into the direction of the input axes ($X^K$, $Y^K$), and

($e_2$) the angular rate of the carrier relatively to the earth, and

(f) the signal processing means further contain quotient forming means (62, 100) for forming the quotients of the thus corrected angular rate signals.

2. Device as set forth in claim 1, characterised in that the angular rate signals are additionally superimposed by respective correction signals accounting for the known drift ($d_x^k$, $d_y^k$) of the angular rate sensor means (10).

3. Device as set forth in claim 1 or 2, characterised in that the signal processing means comprise, for each input axis ($x^K$, $y^K$),

(a) means (24, 26) for temporal integration of the signal ($w_x^k$, $w_y^k$) of the angular rate sensor means (10) for forming said signal obtained from the angular rate sensor means (10),

(b) means (28, 30) for temporal integration of the acceleration signal ($A_x$, $A_y$) associated with the respective input axis ($x^K$, $y^{K)}$) and produced by the acceleration measuring means (16, 18),

(c) means (32, 34) for multiplication of the integrated acceleration signal by the ratio of the vertical component ( s) of the angular rate of the earth to the gravity-caused acceleration (g),

(d) means (40, 42) for division of the acceleration signal associated with the respective input axis ($x^K$, $y^K$) by the gravity-caused acceleration (g), and

(e) means (52, 56 and 54, 58, respectively) for subtraction of said multiplied and integrated acceleration signal and said acceleration signal multiplied by the gravity-caused acceleration as correction signals from the integrated signal of the angular rate sensor means (10) for forming the corrected angular rate signal.

4. Device as set forth in claim 3, characterised in that

(a) means (44, 46) for storing the gyro drifts $(d_x^k, d_y^k)$ of the angular rate sensor means,

(b) means (48, 50) for multiplication of the stored drifts by the time (T), and

(c) means (52, 56) for subtraction of the thus obtained product as a further correction signal from the integrated signal of the angular rate sensor means (10).

5. Device as set forth in claim 1 or 2, characterised in that the signal processing means comprise, for each input axis $(X^K, y^K)$,

(a) means (68) for scanning the signals of the angular rate sensor means (10) at a predetermined clock frequency for forming the signals obtained from the angular rate sensor means, as well as

(b) means (66) for scanning the signals of the accelerometers (16, 18) at the predetermined clock frequency,

(c) means (70, 72) for multiplication of the scanned acceleration signals by the quotient of the vertical component of the angular rate of the earth and the gravity-caused acceleration,

(d) means (78, 80) for division of the scanned acceleration signals by the gravity-caused acceleration (g),

(e) means (82, 84) for delaying the scanned and divided acceleration signals by one cycle (T),

(f) means (86, 88) for forming the differences between the non-delayed and the delayed divided acceleration signals, and

(g) means (90, 92) for division of the thus obtained differences by the clock time (T), and

(h) means (74, 76) for subtraction of said multiplied acceleration signals and said divided differences as correction signals from the scanned signals of the angular rate sensor means (10) for forming said corrected angular rate signals.

6. Device as set forth in claim 5, characterised in that drift signals $(d_x^k, d_y^k)$ are subtracted as further correction signals from the scanned signals of the angular rate sensor means.

**Revendications**

1. Dispositif déstiné à la détermination de la direction du nord, comprenant

(a) des moyens de détecteur de la vitesse de rotation à deux axes disposés de manière fixe relativement au support (strapdown) et ayant un premier axe d'entrée et un second axe d'entrée perpendiculaire sur celui-ci $(x^K, y^K)$ dans un plan au moins approximativement horizontal,

(b) des premiers moyens accéléromètres (16) répondant aux accélérations $(A^K)$ dans la direction du premier axe d'entrée $(X^K)$,

(c) des seconds moyens accéléromètres (18) répondant aux accélérations $(A_y^K)$ dans la direction du second axe d'entrée $(y^K)$,

(d) des moyens de traitement de signal auxquels les signaux des moyens de détecteur de la vitesse de rotation (10) et des moyens accéléromètres (16, 18) sont appliqués afin d'engendrer un signal de sortie selon l'angle entre une direction de référence et le nord $(x^R)$,

caractérisé par le fait que

(e) par les moyens de traitement de signal, des signaux $(w_x^k, w_y^k)$ obtenus par les moyens de détecteur de la vitesse de rotation (10), qui, en cas d'alignement exactement horizontal du plan des axes d'entrée sont proportionnels aux composantes de la composante horizontale ( c ) de la vitesse de rotation terrestre, et quelles composantes tombent dans la direction des axes d'entrée $(x^K, y^K)$, sont superposés, en cas d'alignement non-horizontal dudit plan, par des signaux de correction dérivés des moyens accéléromètres (16, 18), qui compensent

$(e_1)$ la composante de la composante verticale de la vitesse de rotation terrestre, qui tombe dans la direction des axes d'entrée $(x^K, y^K)$, et

$(e_2)$ la vitesse de rotation du support relativement à la terre, et

(f) les moyens de traitement de signal comprennent, en outre, des moyens de formation de quotient (62, 100) déstinés à la formation du quotient des signaux de vitesse de rotation ainsi corrigés.

2. Dispositif selon la revendication 1, caractérisé par le fait que supplémentairement, un signal de correction à la fois est supperposé aux signaux de vitesse de rotation, lequel signal de correction prend en considération la dérive connue $(d_x^k, d_y^k)$ des moyens de détecteur de la vitesse de rotation (10).

3. Dispositif selon la revendication 1 ou 2, caractérisé par le fait que les moyens de traitement de signal comprennent pour chaque axe d'entrée $(X^K, y^K)$

(a) des moyens (24, 26) déstinés à l'intégration temporelle du signal $(w_x^k, w_y^k)$ des moyens de détecteur de la vitesse de rotation (10) afin de former ledit signal obtenu par les moyens de détecteur de la vitesse de rotation,

(b) des moyens (28, 30) déstinés à l'intégration temporelle du signal d'accélération ($A_x$, $A_y$) des moyens accéléromètres (16, 18), qui est associé à l'axe d'entrée respectif ($x^K$, $y^K$),

(c) des moyens (32, 34) déstinés à la multiplication du signal d'accélération intégré par le rapport de la composante verticale ($\Omega s$) de la vitesse de rotation terrestre à l'accélération terrestre (g),

(d) des moyens (40,42) déstinés à la division du signal d'accélération associé à l'axe d'entrée respectif ($x^K$, $y^K$) par l'accélération terrestre (g), et

(e) des moyens (52, 56 et 54, 58, respectivement) déstinés à la soustraction dudit signal d'accélération multiplié et intégré et dudit signal d'accélération multiplié par l'accélération terrestre en tant que signaux de correction, du signal des moyens de détecteur de la vitesse de rotation (10) afin de former le signal de vitesse de rotation corrigé.

4. Dispositif selon la revendication 3, caractérisé par

(a) des moyens (44, 46) déstinés à mémoriser les dérives du gyroscope ($d_x{}^k$, $d_y{}^K$) des moyens de détecteur de la vitesse de rotation,

(b) des moyens (48, 50) déstinés à multiplier les dérives mémorisées par le temps (T), et

(c) des moyens (52, 56) déstinés à la soustraction du produit ainsi obtenu en tant qu'autre signal de correction, du signal intégré des moyens de détecteur de la vitesse de rotation (10)

5. Dispositif selon la revendication l ou 2, caractérisé par le fait que les moyens de traitement de signal comprennent pour chaque axe d'entrée ($X^K$, $Y^K$)

(a) des moyens (68) déstinés à l'exploration des signaux des moyens de détecteur de la vitesse de rotation (10) à une fréquence de cycles prédéterminée afin de former les signaux obtenus des moyens de détecteur de la vitesse de rotation, ainsi que

(b) des moyens (66) déstinés à l'exploration des signaux des accéléromètres (16, 18) à une fréquence de cycles prédéterminée,

(c) des moyens (70, 72) déstinés à la multiplication des signaux d'accélération explorés par le quotient de la composante verticale de la vitesse de rotation terrestre et l'accélération terrestre,

(d) des moyens (78, 80) déstinés à la division des signaux d'accélération explorés par l'accélération terrestre (g),

(e) des moyens (82, 84) déstinés au retardement d'un cycle (T) des signaux d'accélération explorés et divisés,

(f) des moyens (86, 88) déstinés à la formation des différences du signal d'accélération non-retardé et du signal d'accélération retardé divisé, et

(g) des moyens (90, 92) déstinés à la division des différences ainsi obtenues par le temps de cycle (T), et

(h) des moyens (74, 76) déstinés à la soustraction desdits signaux d'accélération multipliés et desdites différences divisées en tant que signaux de correction, des signaux explorés des moyens de détecteur de la vitesse de rotation (10) afin de former lesdits signaux de vitesse de rotation corrigés.

6. Dispositif selon la revendication 5, caractérisé par le fait que des signaux de dérive ($d_x{}^k$, $d_y{}^k$) en tant qu'autres signaux de correction, sont soustraits des signaux explorés des moyens de détecteur de la vitesse de rotation.

Fig.1

Fig.2

Fig.3

Fig.4

Fig.5